# FASCICULE DE BREVET EUROPEEN

(11) **EP 0 509 242 B1**
(45) Date de publication et mention de la délivrance du brevet: **18.05.1994**
(21) Numéro de dépôt: 92104348.5
(22) Date de dépôt: 13.03.1992
(51) Int. Cl.: B65G 69/04

(54) **Dispositif de répartition uniforme de matières poudreuses**
Vorrichtung zur gleichmässigen Verteilung von pulverförmigen Materialien
Device for the uniform distribution of powdery material

(30) Priorité: 19.04.1991 LU 87922; 04.03.1992 LU 88076
(43) Date de publication de la demande: 21.10.1992
(73) Titulaire: PAUL WURTH S.A., 1122 Luxembourg (LU)
(72) Inventeur: Lonardi, Emile, L-4995 Bascharage (LU); Andonov, Radomir, L-8215 Mamer (LU); Loutsch, Jeannot, L-8041 Strassen (LU); Wies, Georges, L-3462 Dudelange (LU)
(74) Mandataire: Freylinger, Ernest T.

(56) Documents cités:
- DE-B- 1 160 790
- DE-C- 909 434
- US-A- 4 300 725

## Description

La présente invention concerne un dispositif selon le préambule de la revendication 1.

Un dispositif de répartition uniforme de matières poudreuses sur une surface circulaire est proposé par le document EP-A-0343466. Quoique n'y étant pas limitée, la présente invention vise plus particulièrement l'application de ce dispositif connu à la distribution de poudre de lignite dans un séchoir de lignite à lit fluidisé. Dans cette application, le dispositif d'entraînement de la goulotte doit répondre à deux critères difficilement conciliables entre eux. D'un côté, il faut à tout prix éviter la pénétration d'huile ou de lubrifiant dans l'enceinte du séchoir. D'un autre côté, la conception d'un entraînement classique, par exemple à engrenages, est difficilement concevable sans lubrification si l'on veut éviter les risques de grippage sous l'action néfaste des fines particules de poudre de lignite.

Un dispositif selon le préambule de la revendication 1 est connu par le document DE-B-1 160 790.

Le but de la présente invention est d'améliorer l'entraînement et de concilier ces deux exigences opposées en proposant un dispositif du genre décrit dans le préambule dans lequel les risques de grippage des pièces mobiles et les risques de pénétration de lubrifiant dans le séchoir sont très réduits.

Pour atteindre cet objectif, le dispositif proposé par la présente invention est essentiellement caractérisé en ce que ladite cage est munie d'une couronne dentée périphérique dans laquelle s'engage une chaîne sans fin qui transmet un mouvement rotatif à ladite cage.

Cette chaîne d'entraînement est une chaîne du genre chaîne de vélo, c'est-à-dire une chaîne auto-nettoyante, qui ne nécessite pas de lubrification.

Par ailleurs, chaque roue de support ou de guidage est montée par l'intermédiaire de roulements lubrifiés logés dans des chambres remplies de lubrifiant et isolées de l'intérieur du bâti par un système d'étanchéité. Ceci empêche, d'un côté, la pénétration de poussières dans le roulement et, vice-versa, la pénétration de lubrifiant en direction de l'intérieur du séchoir. Vues les dimensions réduites des roues de support et de guidage, des joints étanches seront d'ailleurs facilement réalisables et leur entretien ne causera pas de problèmes.

Dans une première variante d'exécution la cage est suspendue par l'intermédiaire de ladite couronne dans trois roues à gorges espacées circonférentiellement de 120° et qui s'engagent avec ledit bord périphérique de la couronne. Ces trois roues assurent donc à la fois une fonction "support vertical" et une fonction "guide latéral".

Les trois roues à gorges ont un axe vertical et sont déplaçables radialement par rapport au disque de la cage rotative pour permettre, soit le démontage des poulies, soit le démontage de la cage rotative. Cette possibilité de déplacement radial des poulies peut être réalisée par le fait que le roulement de chaque roue à gorge est logé de manière excentrique dans le socle cylindrique d'un boîtier dont la rotation occasionne un déplacement radial de la roue à gorge.

La position opérative de deux roues à gorges est fixe, tandis que la position opérative de la troisième roue à gorge est, de préférence, soumise à l'action d'au moins un ressort de positionnement pour permettre la compensation des dilatations thermiques et excentricités du disque. Cette troisième roue à gorge est, de préférence, logée de manière excentrique dans une douille intermédiaire, qui est logée, à son tour, de manière excentrique dans le socle cylindrique de son boîtier, tandis que le ressort de positionnement agit entre un appui solidaire du boîtier et un appui solidaire de la douille.

Dans une deuxième variante d'exécution la cage prend appui, par l'intermédiaire du bord périphérique de la couronne, sur trois roues lisses identiques, dont les axes horizontaux sont coplanaires, font entre eux un angle de 120° et sont dirigés vers l'axe de rotation de la couronne. De plus elle est guidée dans un plan horizontal par trois autres roues lisses, qui ont des axes verticaux et qui prennent appui sur le bord latéral de la couronne, à trois endroits espacés circonférentiellement de 120°.

Deux des roues à axe vertical sont fixes, tandis que la troisième est montée de façon à présenter une certaine élasticité radiale afin de compenser des excentricités et des variations de diamètre de la couronne.

Pour garantir un mouvement de rotation stable de la couronne sur les roues d'appui, la goulotte est de préférence équilibrée statiquement et dynamiquement par un contre-poids.

D'autres particularités, avantages et caractéristiques ressortiront de la description détaillée d'un mode de réalisation préféré, présenté ci-dessous, à titre d'illustration, en référence aux dessins annexés, dans lesquels:
la Figure 1 montre une vue schématique en coupe verticale d'un dispositif de répartition selon la présente invention, la suspension de la cage rotative comprenant trois roues à gorges;
la Figure 2 montre une vue en plan du dispositif de la Figure 1;
la Figure 3 montre par une coupe longitudinale la suspension excentrique d'une roue à gorge dans son boîtier;
la Figure 4 montre par une coupe brisée la suspension élastique en direction radiale d'une troisième roue à gorge;
la Figure 5 montre une vue agrandie d'une roue à gorge et de son logement;
la Figure 6 représente une vue en plan de la Figure 5;
la Figure 7 représente une vue correspondant à celle de la Figure 6 après rotation de 180°, pour placer la roue à gorge en position de démontage;
la Figure 8 est une vue correspondant à celle de la Figure 6, après une légère rotation occasionnée par une dilatation thermique ou une excentricité du disque;
la Figure 9 est une vue identique a Figure 1, la suspension de la cage rotative comprenant trois paires de roues lisses et la goulotte étant équilibrée par un contre-poids;
la Figure 10 est une coupe longitudinale du montage d'une paire de roues supportant et guidant la goulotte;
la Figure 11 est une coupe analogue à celle de la Figure 10, la roue de guidage étant montée de façon élastique, afin de compenser des excentricités et variations de diamètre.

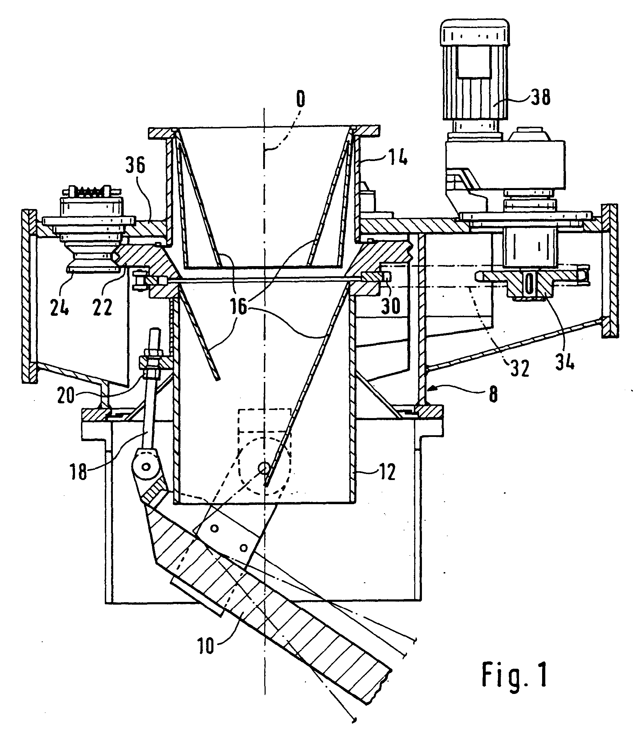

La Figure 1 montre une goulotte de distribution du genre décrit dans le document précité pour répartir des matières poudreuses, en l'occurrence de la lignite en poudre, uniformément sur une surface circulaire dans un séchoir à lignite. La goulotte 10 est suspendue de manière pivotante à une cage rotative 12 à travers laquelle la poudre est déversée sur la goulotte 10. La cage 12 est surmontée d'un canal fixe 14 d'alimentation recevant la matière d'un silo de stockage. Aussi bien la cage rotative 12 que le canal 14 peuvent être pourvus de déflecteurs 16 pour guider la matière en chute. L'inclinaison de la goulotte 10 par rapport à l'axe vertical O est déterminée par une tige 18 articulée sur l'extrémité arrière de la goulotte 10 et fixée sur la paroi extérieure de la cage 12. Cette inclinaison est, de préférence, ajustable manuellement grâce à des écrous de positionnement 20 sur la tige 18.

Pour permettre la rotation de la goulotte 10, la cage 12 doit être montée de manière rotative à l'intérieur de son bâti de support fixe 8 qui est posé au-dessus du séchoir non représenté.

Comme il ressort de la Figure 1, qui montre un premier mode de suspension de la cage rotative 12 dans son bâti 8, la partie supérieure de la cage 12 est solidaire d'une couronne annulaire périphérique 22. Cette couronne 22 est supportée et guidée à son bord périphérique par trois roues à gorge 24, 26, 28, arrangées selon une disposition triangulaire dans un plateau horizontal 36 du bâti 8, entourant le canal 14. Les gorges des roues et le bord périphérique du disque ont des sections complémentaires, qui peuvent être de forme trapézoïdale comme représentée sur la Figure 1. Il est également possible que ces formes complémentaires soient arrondies. Ces roues à gorge 24, 26 et 28 assurent par conséquent le support vertical de la couronne 22 et son guidage dans un plan horizontal et permettent ainsi une rotation de la cage 12 autour de l'axe O. A cet effet, une couronne dentée 30 est prévue autour de la cage 12 ou d'une jupe de la couronne 22 pour coopérer avec une chaîne d'entraînement 32 qui, conformément à la présente invention, est une chaîne du type "Gall" ou chaîne de vélo. Cette dernière est entraînée par un pignon denté 34, qui est actionné à travers le plateau 36 au moyen d'un moteur 38 monté à l'extérieur du bâti 8. La chaîne 32 a l'avantage d'être auto-nettoyant, dans la mesure où les dents pénétrants dans la chaîne en provoquent un auto-nettoyage. De plus elle ne nécessite pas de lubrification, par suite de la combinaison de matières auto-lubrifiantes constituant la chaîne 32 et la couronne dentée 30.

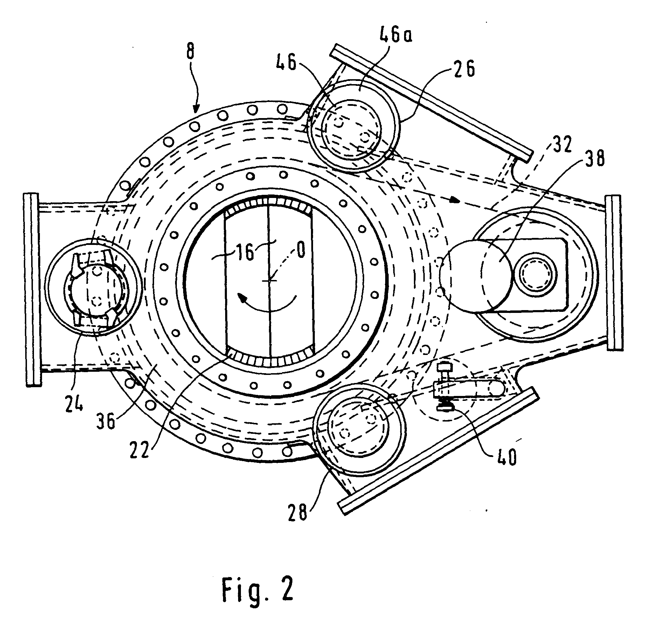

La référence 40 (voir Figure 2) désigne un galet tendeur de la chaîne 32. Il s'agit d'un tendeur connu en soi, monté sur un levier pivotant soumis à l'action d'un ressort qui applique le tendeur contre la chaîne 32. Au lieu du galet tendeur 40, il est possible de monter le bloc-moteur 38 d'une façon analogue sur le bâti 8, afin qu'il subisse l'action d'un ressort dans le sens diamétralement opposé à la cage rotative 12, pour exercer une traction constante sur la chaîne 32.

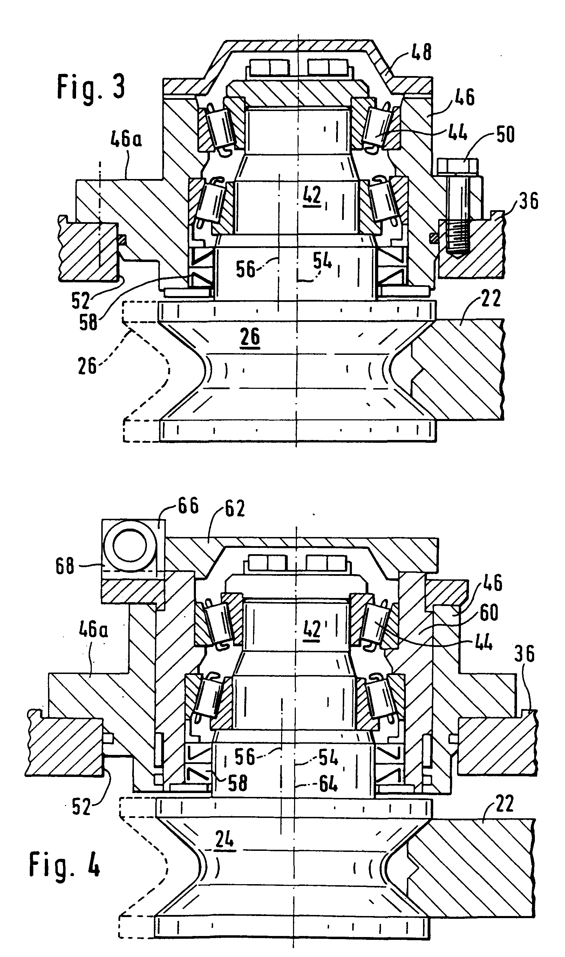

A cause de l'interpénétration entre les roues à gorge 24, 26 et 28 d'une part, et le bord périphérique de la couronne 22 d'autre part, il serait très difficile, voire impossible de démonter les roues ou la cage rotative. Pour y remédier, et selon l'une des particularités de la présente invention, chacune des trois roues à gorge 24, 26, 28 est déplaçable radialement pour les libérer de la couronne 22 en vue d'un montage ou d'un démontage, soit des roues à gorge, soit de la cage rotative 12 et de la goulotte 10. Ce montage sera expliqué plus en détail en référence à la Figure 3, qui représente une coupe transversale à travers la roue à gorge 26 et son logement. Reste à noter que la roue à gorge 28 est montée de la même manière que la roue à gorge 26.

La roue à gorge 26 est solidaire d'un arbre coaxial 42 qui est logé par l'intermédiaire d'un roulement à rouleaux 44, connu en soi, dans un boîtier cylindrique 46 fermé de manière étanche par un couvercle 48. Ce boîtier 46 est fixé par l'intermédiaire de boulons 50 dans une ouverture circulaire 52 du plateau 36. Le positionnement de la roue à gorge 26 et de son roulement est excentrique par rapport à l'ouverture 52 et au socle 46a du boîtier 46 destiné à pénétrer dans cette ouverture 52. Il en résulte que l'axe 54 de la roue 26 et de son roulement est désaxé par rapport à l'axe 56 de l'ouverture 52 et se trouve plus près de la couronne 22. Cette excentricité est également visible sur la Figure 2.

Pour procéder au démontage on enlève les boulons 50 de fixation du boîtier 46 pour libérer celui-ci par rapport au plateau 36. En tournant le boîtier 46 de 180° autour de l'axe 56 de l'ouverture 52, l'excentricité de la roue 26 provoque une rotation de son axe 54 autour de l'axe fixe 56 pour placer l'axe 54 dans une position symétrique de l'autre côté de l'axe 56. Cette rotation déplace la roue 26 dans la position représentée en traits interrompus et la libère complètement de son engagement avec la couronne 22. Dans cette position elle peut être retirée librement à travers l'ouverture 52. Le montage de la roue à gorge 26 comporte bien entendu les opérations inverses.

La référence 58 désigne des joints étanches destinés à assurer une étanchéité parfaite entre l'arbre 42 et et le boîtier 46. Ceci permet de remplir le logement de l'arbre 42 à l'intérieur du boîtier 46 de lubrifiant pour assurer la lubrification du roulement. Il est même possible de prévoir des moyens, tels qu'une jauge ou des témoins visuels pour contrôler en permanence le niveau de lubrifiant dans le boîtier 46.

La description donnée ci-dessus s'applique de façon identique aux roues à gorge 24 et 28, à l'exception que le montage de la roue 24 est un peu plus complexe pour permettre une compensation des dilatations thermiques ou excentricités de la couronne 22. En effet, par suite des variations de température il est possible que la couronne 22 se dilate ou se rétracte ou, à la limite, qu'elle ne soit plus parfaitement ronde. Or, la position des roues 26 et 28 étant fixe, on a prévu une certaine élasticité dans le montage de la roue à gorge 24 afin que celle-ci puisse compenser toute irrégularité de la couronne 22.

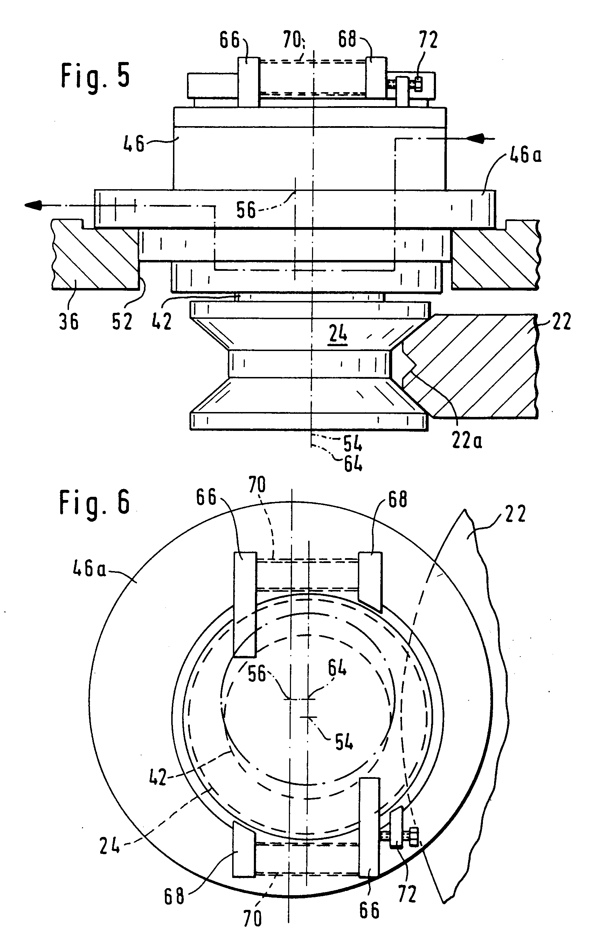

La Figure 4 montre les détails du montage élastique en direction radiale de la roue à gorge 24. Sur cette figure on a utilisé les mêmes références pour désigner les éléments correspondants à ceux de la Figure 3. On notera que la roue 24 est également montée de manière excentrique dans le boîtier 46 de sorte que son axe 54 soit décalé par rapport à l'axe 56 pour permettre, par une rotation de 180° du boîtier 46, de déplacer la roue à gorge 24 de la position en traits pleins vers la position en traits interrompus.

En différence par rapport à la Figure 3, une douille intermédiaire 60 est entreposée entre le roulement 44 de l'arbre 42 de la roue à gorge 24 et la paroi cylindrique intérieure du boîtier 46. Cette douille 60 peut tourner, à l'intérieur du boîtier 46 autour de son axe 64. Le plan de coupe de la Figure 4 est tel que l'axe 64 de la douille 60 soit confondu avec l'axe 54 de la roue 24. Toutefois, l'arbre 42 est logé de façon excentrique dans la douille 60, de sorte que son axe 64 soit décalé par rapport à l'axe 54 de la roue à gorge 24. Dans un plan de coupe perpendiculaire à celui de la Figure 4 on remarquerait ce décalage entre les axes 54 et 64. Par contre, dans ce plan de coupe perpendiculaire, l'axe 64 serait confondu avec l'axe 56 lorsque la roue à gorge 24 se trouve en position opérative.

Cette excentricité entre l'axe 54 de la roue à gorge 24 et l'axe 64 de la douille 60 permet, par une rotation de cette dernière, un déplacement radial de la roue à gorge 24 par rapport à la couronne 22, ce qui sera expliqué plus en détail en référence aux figures suivantes.

Le logement de la Figure 4 est fermé, de manière étanche, par un couvercle 62 qui est appliqué cette fois sur la douille 60 et non sur le boîtier 46 comme pour les roues 26 et 28. Le couvercle 62 et la douille 60 subissent l'action d'un ressort, qui est en appui sur le boîtier 46 et qui maintient toujours la roue à gorge 24 en engagement avec le bord périphérique de la couronne 22. Tout mouvement de la roue à gorge 24 sous l'effet d'une excentricité ou d'une variation de diamètre de la couronne 22 devant se faire contre l'action de ce ressort.

La Figure 5 montre une vue latérale de la roue 24 et de son boîtier de logement 46 dans l'ouverture circulaire 52 du plateau 36. La référence 70 désigne un puissant ressort, par exemple un ressort à boudin ou un ressort pneumatique tendu entre un appui 66 solidaire du boîtier 46 et un appui 68 solidaire de la douille mobile 60. Une vis de réglage 72 agissant sur l'appui 68 de la douille 60 permet le réglage de la précontrainte du ressort 70 et le positionnement correct de la roue à gorge 24 lors du montage. Après le montage la vis 72 peut être dévissée complètement étant donné que la roue à gorge 24 sera maintenue en place par le ressort 70 qui appuie la roue à gorge 24 contre le bord périphérique de la couronne 22. Comme le montre la Figure 6, il est préférable, pour des raisons de symétrie des forces, de prévoir le ressort 70 ainsi que les appuis 66 et 68 en double, à des positions diamétralement opposées. Par contre, il suffit d'une vis de réglage 72.

La Figure 6 montre les positions excentriques des trois axes 54, 56 et 64, qui permettent à l'axe 54 de graviter soit autour de l'axe 56, soit autour de l'axe 64, suivant que l'on fait intervenir l'excentricité par rapport au boîtier 46, ou l'excentricité par rapport à la douille 60.

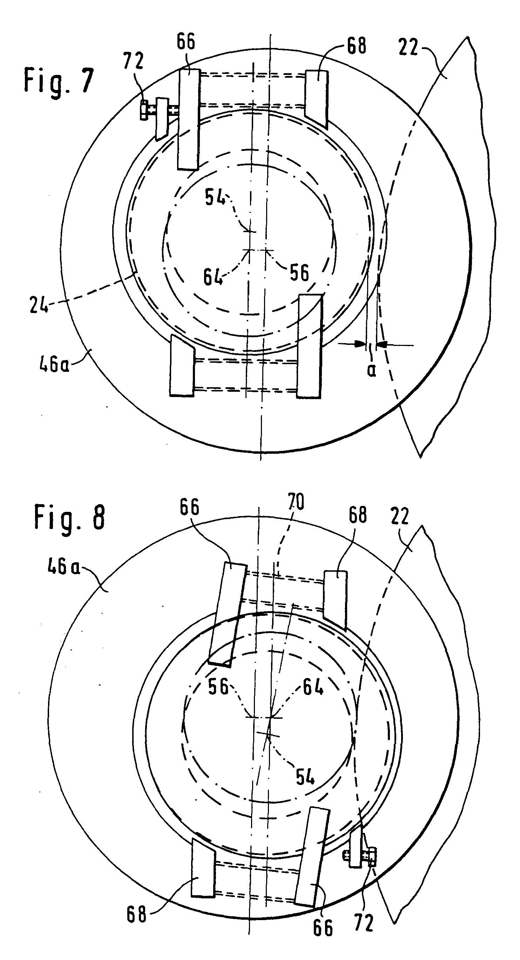

La Figure 7 est une vue analogue à celle de la Figure 6 et illustre le positionnement lors du démontage. Cette position est obtenue en tournant le socle 46a du boîtier de 180° dans son ouverture 52, après avoir déboulonné le boîtier du plateau 36. Cette rotation est effectuée autour de l'axe 56 de l'ouverture 52 et place les deux axes 54 et 64 dans des positions diamétralement opposées par rapport à leur position respective sur la Figure 6. Ce mouvement provoque un déplacement radial de la roue à gorge 24 pour libérer celle-ci de la couronne 22, ce qui est illustré par le jeu (a) entre le bord de la roue à gorge 24 et le bord périphérique de la couronne 22. A noter que les positions angulaires mutuelles des axes de la roue 24 et de la douille 60 ne changent pas lors de cette rotation du boîtier 46.

La Figure 8 est une vue analogue à celle de la Figure 6 et sert à illustrer le fonctionnement de la seconde excentricité entre la roue à gorge 24 et la douille 60. Celle-ci peut notamment intervenir lors d'une augmentation du diamètre externe de la couronne 22 sous l'effet d'une augmentation de température. Une telle poussée de la couronne 22 sur la roue à gorge 24 provoque une rotation de la douille 60 autour de son axe 64 à l'intérieur du boîtier 46. Cette rotation doit s'effectuer contre l'action des ressorts 70 qui sont comprimés par le rapprochement des appuis 66 par rapport aux appuis fixes 68.

Grâce au montage excentrique de la roue à gorge 24 par rapport à la douille 60, l'axe 54 de la roue à gorge 24 gravite dans le sens des aiguilles d'une montre autour de l'axe de rotation 64. Ce montage permet par conséquent à la roue à gorge 24 de se positionner automatiquement en fonction des excentricités ou dilatations de la couronne 22. Par contre, lorsque la couronne 22 se rétracte, la douille 60 tourne dans le sens inverse des aiguilles d'une montre sous l'effet de la poussée des ressorts 70.

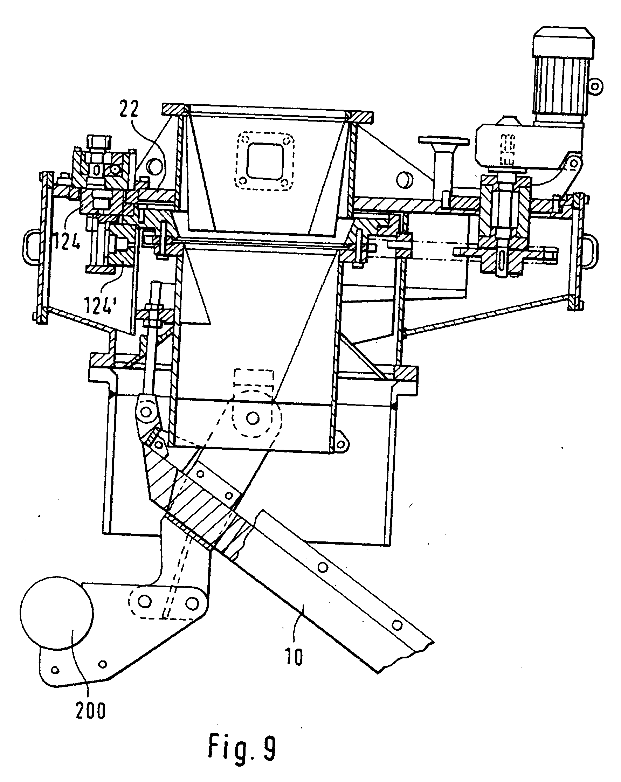

La Figure 9 montre un dispositif analogue à celui de la Figure 1. Mais au lieu d'utiliser trois roues à gorge pour supporter et guider ladite couronne annulaire 22, on utilise trois paires de roues lisses 124, 124', 126, 126' et 128, 128' pour obtenir le même résultat.

Il sera apprécié que cette variante avec trois paires de roues a par rapport aux roues à gorge 24, 26, 28 l'avantage d'une usure plus faible des roues et de la couronne 22. De plus le démontage des roues peut dans cette deuxième variante se faire de façon plus aisée que dans la première variante.

On notera que les premières roues 124, 126, 128 de chaque paire ont un axe de rotation vertical et guident la couronne 22 dans un plan horizontal en prenant appui sur le bord latéral de la couronne 22 à trois endroits circonférentiellement espacés d'environ 120°. Les deuxièmes roues 124', 126', 128' de chaque paire assurent par contre le support vertical de la couronne 22. Elles ont à cet effet des axes horizontaux et sont disposés en-dessous du bord périphérique de la face inférieure de la couronne 22 de façon que leurs axes coplanaires fassent entre eux un angle de 120° et soient dirigés vers l'axe de rotation de la couronne 22.

Contrairement aux roues à gorge 24, 26, 28 qui servaient à la fois de supports et de guides, on a dans la présente exécution séparé la fonction "support vertical" de la fonction "guide latéral". La première fonction est réalisée par les roues 124', 126', 128' à axe horizontal, tandis que la seconde fonction est réalisée par les roues 124, 126, 128 à axe vertical.

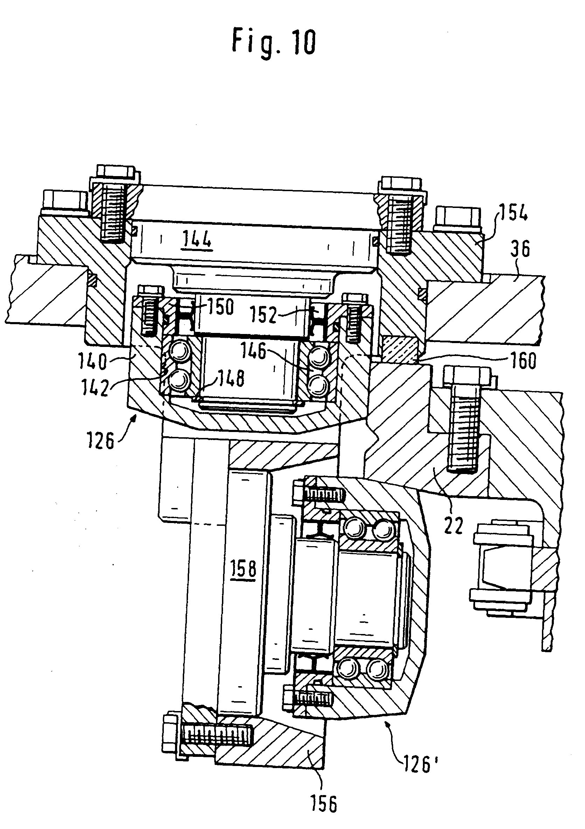

La Figure 10 montre les détails du montage d'une paire de roues lisses 126, 126'. La roue 126 est constituée d'un disque épais 140 qui est muni dans une de ses bases d'un alésage axial borgne 142. Cette roue 126 est montée sur l'extrémité inférieure d'un arbre vertical fixe 144, à l'aide d'un roulement à bille 146. La bague intérieure de ce roulement 146 est ajustée sur l'arbre 144 et est sécurisée contre un déplacement axial par un anneau élastique 148. La bague extérieure est ajustée dans ledit alésage borgne 142 de la roue 126, dans lequel elle est maintenue en place par un manchon 150 vissé sur la roue 126. Le manchon 150 est muni d'un joint étanche circulaire 152 qui vient se fermer radialement autour de l'arbre 144, de façon à définir une chambre étanche de logement du roulement 146, qui puisse être remplie d'un lubrifiant.

A son extrémité supérieure l'arbre est vissé sur un manchon-support 154, qui est lui-même monté dans une ouverture du plateau 36. Ce manchon-support 154 se prolonge vers le bas par un bras vertical 156. Dans une ouverture de ce bras est fixé avec une extrémité un second arbre 158, dont l'axe horizontal est orienté en direction diamétrale de la couronne 22. Cet arbre 158 supporte à son autre extrémité la roue 126', qui est montée à l'aide d'un roulement à bille, de la même façon que la roue 126. En aplomb de cette roue 126', faisant face à la face supérieure de la couronne 22, est intégrée une surface de butée 160 dans le manchon-support 154. Cette surface de butée 160 évite une déplacement axial vers le haut de la couronne 22 reposant librement sur les roues 124', 126' et 128'. En fonctionnement normal un jeu est assuré entre la surface de butée 160 et la face supérieure de la couronne 22. Des butées analogues sont d'ailleurs aussi prévues à l'aplomb des roues 124' et 128'.

La deuxième paire de roues 128, 128' est montée de façon exactement identique, à une distance angulaire de 120° de la paire de roues 126, 126' contre le bord périphérique de la couronne 22.

La troisième paire de roues 124, 124' se distingue uniquement des deux autres paires de roues par un montage particulier de la roue 124 à axe vertical qui confère à cette dernière une élasticité en direction radiale de la couronne 22. La roue 124 peut ainsi compenser des excentricités et variations de diamètre de la couronne 22. Le montage de la roue 124 fonctionne d'ailleurs suivant le principe qu'on a étudié pour la roue à gorge 24. En guise de variante d'exécution on a cependant remplacé la douille à alésage excentrique dans le présent mode d'exécution par un arbre à axe excentrique.

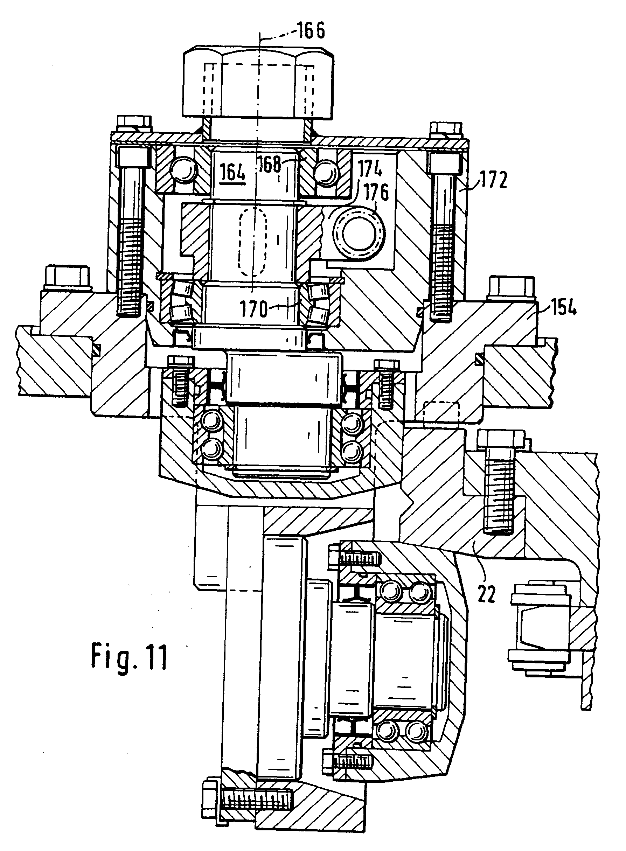

La Figure 11 montre ce montage en détail. Il convient de remarquer tout d'abord que la coupe à travers le montage de la roue supérieure est une coupe par un plan perpendiculaire qui a été rabattue dans le plan de la figure.

On voit que l'extrémité inférieure d'un arbre 164 supporte la roue 124 exactement de la même façon telle que décrite pour la roue 126. L'extrémité supérieure de l'arbre 164 n'est cependant plus vissée audit manchon-support 154, mais est monté de façon à pouvoir tourner autour de son axe 166, grâce à un montage sur roulements à billes 168 et roulements à rouleaux 170, incorporé dans un boîtier étanche 172 qui est vissé sur ledit manchon-support 154. On notera que l'axe 166 est décalé par rapport à l'axe de l'extrémité inférieure de l'arbre 164 supportant la roue 124.

Un bras 174 est solidaire de l'arbre 164, et sur ce bras 174 prend appui avec une de ses extrémités un puissant ressort 176, qui s'appuie avec son autre extrémité sur le boîtier 172. L'arbre 164 est donc soumis à un couple qui essaie de le faire tourner autour de son axe 166. Or, comme la roue 124 est excentrique par rapport à cet axe 166, elle est soumise à un moment qui vient l'appliquer contre le bord latéral de la couronne 22. La roue 124 peut donc suivre élastiquement une variation de diamètre ou une excentricité locale de la couronne 22.

Dans un plan horizontal la couronne 22 est en conséquence guidée par deux roues 126 et 128 à axe vertical fixe et par une roue 124 dont l'axe vertical est soumis à un moment élastique qui assure le contact entre la roue 124 et la couronne 22.

Dans la réalisation préférée décrite ci-avant une roue à axe horizontal a été chaque fois associée avec une roue à axe vertical dans un montage sur un manchon-support 154 commun. Il est cependant évident que les roues à axe horizontal et les roues à axe vertical pourraient être aussi montées indépendamment les unes des autres.

Reste à noter que les surfaces d'appui des six roues sont de préférence légèrement bombées afin de réaliser un contact optimal avec les surfaces d'appui correspondantes de la couronne 22 par exemple en cas d'imprécisions de fabrication ou de déformations.

Sur la Figure 9 on voit que la goulotte 10 est munie d'un contre-poids. Ce contre-poids est de préférence dimensionné de façon que le centre de gravité de l'ensemble goulotte-contrepoids se situe sur l'axe de rotation de la couronne 22. De cette façon les forces d'appui verticales sur les roues 124', 126' et 128' ne sont pas fonction de la position de la goulotte, ce qui permet d'éviter un basculement de la couronne 22 sur ses trois appuis 124', 126' et 128', lorsque la goulotte 10 est mise en rotation. De plus l'emplacement du contre-poids est choisi de façon que les forces centrifuges dues au contre-poids d'un côté, et à la goulotte de l'autre côté s'annulent mutuellement. De cette façon la couronne 22 est libre de tous moments et de toutes forces qui pourraient entraîner un mouvement instable de la couronne 22 sur ses roues d'appui 124, 124', 126, 126', 128, 128'.

Il est possible de prévoir des moyens appropriés pour supporter la cage rotative 12 par l'intermédiaire de la couronne 22 en cas de démontage d'une ou de plusieurs roues, aussi bien dans la première que dans la deuxième variante d'exécution. A cet effet, il est possible de prévoir une gorge périphérique 22a dans le bord extérieur de la couronne 22 comme représenté sur la Figure 5. Avant de procéder au démontage d'une ou de plusieurs roues, il suffit d'engager, à des endroits appropriés à travers le bâti 8 des vis à tête pointue, destinées à pénétrer dans la rainure 22a pour assurer le support de la couronne 22 en l'absence de roues.

Il est de même possible de prévoir des moyens pour maintenir une légère surpression dans la région de la couronne 22 et des roues pour maintenir les poussières et poudres à l'écart.

## Revendications

1. Dispositif de répartition uniforme de matières poudreuses sur une surface circulaire à l'aide d'une goulotte de distribution (10) suspendue de manière pivotante à une cage (12) de façon que l'angle d'inclinaison de la goulotte (10) par rapport à l'axe vertical (O) de ladite cage (12) soit ajustable, ladite cage (12) étant suspendue à une couronne annulaire périphérique (22) à axe vertical, ladite couronne (22) ayant un bord périphérique qui est supporté verticalement et guidé latéralement par des roues espacées circonférientiellement d'un angle de 120°, ces dernières étant montées par l'intermédiaire de roulements sur un bâti de support de ladite cage (12), caractérisé en ce que ladite cage est munie d'une couronne dentée périphérique (30) dans laquelle s'engage une chaîne sans fin (32), qui transmet un mouvement rotatif à ladite cage (12).

2. Dispositif selon la revendication 1, caractérisé en ce que les roulements de montage des roues sont tous logés dans des chambres de logement étanches qui sont remplies d'un lubrifiant.

3. Dispositif selon la revendication 1 ou 2, caractérisé en ce que le bord périphérique de la couronne (22) s'engage avec trois roues à gorge (24, 26, 28) à axe vertical, qui sont circonférentiellement espacées de 120° autour de ladite couronne (22).

4. Dispositif selon la revendication 3, caractérisé en ce que les trois roues à gorge (24, 26, 28) sont déplaçables radialement par rapport à la couronne (22) de la cage rotative (12) entre une position opérative et une position d'extraction.

5. Dispositif selon la revendication 4, caractérisé en ce que les roulements de chaque roue à gorge (24, 26, 28) sont logés de manière excentrique dans un socle cylindrique (46a) d'un boîtier étanche (46), dont la rotation occasionne un déplacement radial de la poulie.

6. Dispositif selon la revendication 3, caractérisé en ce que la position opérative de deux roues à gorge (26, 28) est fixe et en ce que la position opérative de la troisième roue à gorge (24) est soumise à l'action d'au moins un ressort de positionnement (70).

7. Dispositif selon la revendication 6, caractérisée en ce que ladite troisième roue à gorge (24) est logée de manière excentrique dans une douille intermédiaire (60) qui est logée, à son tour, de manière excentrique dans le socle cylindrique (46a) du boîtier (46) et en ce que le ressort de positionnement (70) est tendu entre un appui (66) solidaire de la douille (60) et un appui (68) solidaire du boîtier (46).

8. Dispositif selon la revendication 7, caractérisé en ce que la prétension du ressort (70) est ajustable par une vis de réglage (72), agissant sur l'appui (66) de la douille (60).

9. Dispositif selon la revendication 1 ou 2, caractérisé en ce que le bord périphérique de la couronne 22 prend verticalement appui sur trois roues lisses (124', 126', 128') identiques, dont les axes de rotation horizontaux sont coplanaires, font entre eux un angle de 120° et sont dirigés vers l'axe de rotation de la couronne 22, et en ce que le bord périphérique de la couronne 22 est guidé latéralement par trois roues lisses (124, 126, 128) à axes verticaux, disposés à trois endroits espacés circonférentiellement de 120°.

10. Dispositif selon la revendication 9, caractérisé en ce qu'en aplomb des roues à axe horizontal (124', 126', 128') en face de la face supérieure de la couronne 22, est aménagée une surface de butée 160 solidaire du bâti 8 qui limite le jeu axial de la couronne 22 vers le haut.

11. Dispositif selon l'une quelconque des revendications 9 ou 10, caractérisé en ce que deux des roues à axe vertical (126, 128) sont fixes et en ce que la troisième roue à axe vertical (124) est montée de façon excentrique et est soumise à l'action d'au moins un ressort (176).

12. Dispositif selon la revendication 11, caractérisé en ce que la troisième roue à axe vertical (124) est montée sur l'extrémité excentrique d'un arbre (164) qui est monté à l'aide de roulements dans un boîtier étanche (172) et qui est soumis par l'intermédiaire d'un bras (174) à l'action d'un ressort (176) prenant appui sur ledit boîtier (172).

13. Dispositif selon l'une quelconque des revendications 1 à 12, caractérisé en ce que la goulotte (10) est équilibrée statiquement et dynamiquement par un contre-poids (200).

14. Dispositif selon l'une quelconque des revendications 1 à 13, caractérisé en ce que la couronne (22) comporte une rainure périphérique (22a) destinée à recevoir au moins trois vis de suspension engageables à travers le bâti.

15. Dispositif selon l'une quelconque des revendications 1 à 14, caractérisé par des moyens pour maintenir une légère surpression dans l'enceinte de l'entraînement et des roues.

## Patentansprüche

1. Vorrichtung zur gleichmäßigen Verteilung von pulverförmigen Materialien über eine kreisförmige Fläche mittels einer Verteilerschurre (10), die an einem Käfig (12) so aufgehängt ist, daß der Neigungswinkel der Schurre (10) bezüglich der vertikalen Achse (O) des Käfigs (12) einstellbar ist, wobei der Käfig (12) an einem ringförmigen, äußeren Kranz (22) mit vertikaler Achse aufgehängt ist, und der Kranz (22) einen äußeren Rand aufweist, der durch Räder, die unter einem Winkel von 120° über den Umfang verteilt sind, vertikal gestützt und seitlich geführt wird, und diese Räder über Wälzlager auf einem Traggerüst des Käfigs (12) angebracht sind, dadurch gekennzeichnet, daß der Käfig mit einem äußeren Zahnkranz (30) versehen ist, in den eine endlose Kette (32) eingreift, die eine Drehbewegung auf den Käfig (12) überträgt.

2. Vorrichtung gemäß Anspruch 1, dadurch gekennzeichnet, daß alle Wälzlager zum Anbringen der Räder in dichten Kammern untergebracht sind, die mit einem Schmiermittel gefüllt sind.

3. Vorrichtung gemäß Anspruch 1 oder 2, dadurch gekennzeichnet, daß der äußere Rand des Kranzes (22) in drei Nuträder (24, 26, 28) mit vertikaler Achse eingreift, die im Abstand von 120° über den Umfang des Kranzes (22) verteilt sind.

4. Vorrichtung gemäß Anspruch 3, dadurch gekennzeichnet, daß die drei Nuträder (24, 26, 28) bezüglich des Kranzes (22) des Drehkäfigs (12) zwischen einer Betriebsposition und einer Ausbauposition radial verschiebbar sind.

5. Vorrichtung gemäß Anspruch 4, dadurch gekennzeichnet, daß die Wälzlager jedes Nutrades (24, 26, 28) in einem zylindrischen Sockel (46a) eines dichten Gehäuses (46) exzentrisch angebracht sind, dessen Drehung eine radiale Verschiebung des Nutrades bewirkt.

6. Vorrichtung gemäß Anspruch 3, dadurch gekennzeichnet, daß die Betriebsposition von zwei Nuträdern (26, 28) fest ist, und daß die Betriebsposition des dritten Nutrades (24) der Wirkung von mindestens einer Positionierungsfeder (70) unterworfen ist.

7. Vorrichtung gemäß Anspruch 6, dadurch gekennzeichnet, daß das dritte Nutrad (24) in einer Zwischenhülse (60) exzentrisch angeordnet ist, die wiederum in dem zylindrischen Sockel (46a) des Gehäuses (46) exzentrisch angeordnet ist, und daß die Positionierungsfeder (70) zwischen einer mit der Hülse (60) fest verbundenen Auflage (66) und einer mit dem Gehäuse (46) fest verbundenen Auflage (68) angeordnet ist.

8. Vorrichtung gemäß Anspruch 7, dadurch gekennzeichnet, daß die Vorspannung der Feder (70) mittels einer Einstellschraube (72), die auf die Auflage (66) der Hülse (60) wirkt, einstellbar ist.

9. Vorrichtung gemäß Anspruch 1 oder 2, dadurch gekennzeichnet, daß der äußere Rand des Kranzes 22 auf drei identischen glatten Rädern (124', 126', 128') vertikal aufliegt, deren horizontale Drehachsen coplanar sind, einen Winkel von 120° miteinander bilden, und zu der Drehachse des Kranzes (22) hin gerichtet sind, und daß der äußere Rand des Kranzes (22) durch drei glatte Räder (124, 126, 128) mit vertikalen Achsen geführt wird, wobei die Räder an drei Stellen angeordnet sind, die im Abstand von 120° über den Umfang des Kranzes verteilt sind.

10. Vorrichtung gemäß Anspruch 9, dadurch gekennzeichnet, daß oberhalb der Räder mit horizontaler Achse, (124', 126', 128') gegenüber der oberen Fläche des Kranzes (22) ein mit dem Gerüst (8) fest verbundener Anschlagblock 160 angeordnet ist, der das axiale Spiel des Kranzes (22) nach oben begrenzt.

11. Vorrichtung gemäß irgendeinem der Ansprüche 9 oder 10, dadurch gekennzeichnet, daß zwei der Räder mit vertikaler Achse (126, 128) fest sind, und daß das dritte Rad mit vertikaler Achse (124) exzentrisch angebracht ist und der Wirkung von mindestens einer Feder (176) unterworfen ist.

12. Vorrichtung gemäß Anspruch 11, dadurch gekennzeichnet, daß das dritte Rad mit vertikaler Achse, (124) auf dem exzentrischen Ende einer Welle (164) angebracht ist, die über Wälzlager in einem dichten Gehäuse (172) gelagert ist, und über einen Arm (174) der Wirkung einer Feder (176) unterworfen ist, die sich auf dem Gehäuse (172) abstützt.

13. Vorrichtung gemäß irgendeinem der Ansprüche 1 bis 12, dadurch gekennzeichnet, daß die Schurre (10) durch ein Gegengewicht (200) statisch und dynamisch ausgewuchtet ist.

14. Vorrichtung gemäß irgendeinem der Ansprüche 1 bis 13, dadurch gekennzeichnet, daß der Kranz (22) eine äußere Nut (22a) aufweist, die dazu bestimmt ist, mindestens drei Aufhängungsschrauben aufzunehmen, die in dem Gerüst angebracht sind.

15. Vorrichtung gemäß irgendeinem der Ansprüche 1 bis 14, gekennzeichnet durch Mittel, um einen leichten Überdruck in der Umhüllung des Antriebs und der Räder aufrechtzuerhalten.

## Claims

1. Device for uniformly distributing powdery materials over a circular surface with the aid of a distributing chute (10) suspended so that it can pivot from a cage (12) so that the angle of inclination of the chute (10) with respect to the vertical axis (O) of the said cage (12) is adjustable, the said cage (12) being suspended from a peripheral annular ring (22) with vertical axis, the said ring (22) having a peripheral edge which is supported vertically and guided laterally by wheels spaced circumferentially by an angle of 120°, the latter being fitted through the use of rolling contact bearings on a structure for supporting the said cage (12), characterized in that the said cage is equipped with a peripheral toothed ring (30) in which there engages an endless chain (32) which transmits a rotational movement to the said cage (12).

2. Device according to Claim 1, characterized in that the rolling contact bearings for fitting the wheels are all housed in sealed housing chambers which are filled with a lubricant.

3. Device according to Claim 1 or 2, characterized in that the peripheral edge of the ring (22) engages with three groove wheels (24, 26, 28) with vertical axis, which are circumferentially spaced by 120° around the said ring (22).

4. Device according to Claim 3, characterized in that the three groove wheels (24, 26, 28) can be moved radially with respect to the ring (22) of the rotary cage (12) between an operative position and an extraction position.

5. Device according to Claim 4, characterized in that the rolling contact bearings of each groove wheel (24, 26, 28) are housed eccentrically in a cylindrical base (46a) of a sealed shell (46), the rotation of which causes a radial movement of the pulley.

6. Device according to Claim 3, characterized in that the operative position of two groove wheels (26, 28) is fixed and in that the operative position of the third groove wheel (24) is subjected to the action of at least one positioning spring (70).

7. Device according to Claim 6, which claim is [sic] characterized in that the said third groove wheel (24) is housed eccentrically in an intermediate bush (60) which is, in turn, housed eccentrically in the cylindrical base (46a) of the shell (46), and in that the positioning spring (70) is stretched between a support (66) secured to the bush (60) and a support (68) secured to the shell (46).

8. Device according to Claim 7, characterized in that the pretension in the spring (70) can be adjusted by an adjusting screw (72) acting on the support (66) of the bush (60).

9. Device according to Claim 1 or 2, characterized in that the peripheral edge of the ring 22 bears vertically on three identical smooth wheels (124', 126', 128') the horizontal axes of rotation of which are coplanar, form an angle of 120° between them, and point towards the axis of rotation of the ring 22, and in that the peripheral edge of the ring 22 is guided laterally by three smooth wheels (124, 126, 128) with vertical axes, which axes are located at three locations which are spaced circumferentially by 120°.

10. Device according to Claim 9, characterized in that vertically in line with the wheels with horizontal axis (124', 126', 128') facing the upper face of the ring 22, is formed an abutment surface 160 secured to the structure 8 which limits the upward axial clearance of the ring 22.

11. Device according to either one of Claims 9 and 10, characterized in that two of the wheels with vertical axis (126, 128) are fixed, and in that the third wheel with vertical axis (124) is fitted eccentrically and is subjected to the action of at least one spring (176).

12. Device according to Claim 11, characterized in that the third wheel with vertical axis (124) is fitted on the eccentric end of a shaft (164) which is fitted with the aid of rolling contact bearings in a sealed shell (172) and which is subjected, through the use of an arm (174) to the action of a spring (176) bearing on the said shell (172).

13. Device according to any one of Claims 1 to 12, characterized in that the chute (10) is statically and dynamically balanced by a counterweight (200).

14. Device according to any one of Claims 1 to 13, characterized in that the ring (22) includes a peripheral groove (22a) intended to receive at least three suspension screws which can be engaged through the structure.

15. Device according to any one of Claims 1 to 14, characterized by means for maintaining a slight excess presure in the enclosed space for the drive and for the wheels.
